# EUROPEAN PATENT SPECIFICATION

(11) **EP 1 883 203 B1**
(45) Date of publication and mention of the grant of the patent: **29.12.2010**
(21) Application number: 06118005.5
(22) Date of filing: 27.07.2006
(51) Int. Cl.: H04L 29/08

(54) **System and method for pushing information from a source device to an available destination device**
System und Verfahren für das Schieben (Push) von Informationen von einer Quellvorrichtung zu einer anwesenden Bestimmungsortvorrichtung
Système et méthode pour pousser l'information d'un dispositif de source à un dispositif disponible de destination

(43) Date of publication of application: 30.01.2008
(73) Proprietor: RESEARCH IN MOTION LIMITED, Waterloo, Ontario N2L 3W8 (CA)
(72) Inventor: Son, Giyeong, Mississauga Ontario L5M 5G4 (CA); Preiss, Bruno R., Waterloo Ontario N2T 1R1 (CA); Lewis, Allan, New Dundee Ontario N0B 2E0 (CA)
(74) Representative: Patel, Binesh

(56) References cited:
- US-B1- 6 868 143
- US-B1- 7 027 801

## Description

The present application relates generally to mobile electronic devices and, more specifically, to a system (claim 1) and method (claim 11) for pushing information from a source to an available one of a plurality of destination devices.

As technology proliferates and people collect digital devices such as cellular phones, personal digital assistants, personal computers, and other devices, simultaneously managing the information flow on all of these devices becomes a burden for both the user of the devices, as well as others who may be trying to contact the user. In some cases, a client or co-worker may attempt to contact a person by email while the person is inaccessible by email but accessible by cellular phone. In other cases, a client or co-worker may attempt to contact the person by phone while the person is inaccessible by phone but is using a computer and is instantly accessible via an instant messaging application. Even though a person may be accessible by a means of communication, current methods of communication do not guarantee that co-workers will be able to connect with the person. For time critical messages, the juxtaposition of technology that users are currently forced to deal with can have severe adverse consequences. Additionally, trying to figure out the most effective way to contact a person at a particular time of day is a waste of time that is better spent on other activities.

Accordingly, there remains a need for improvements to be made to how digital devices interact with each other and how information is delivered to digital devices, and there is a need for mediation between the various services supplying information to the digital devices.

US-B-6868143 discloses a unified messaging system adapted to receive and store messages in a plurality of formats. User preferences stored at the messaging system detail in which formats the receiving user may wish to store messages. Following receipt and storage of a message, the system awaits a request from the receiving user to retrieve his or her messages. Based on the type of device the receiving user has employed to access the system, the message is delivered in the appropriate format.

US-B-7027801 describes a method and system for delivering location-based targeted advertising to mobile communication devices. Customer and vendor information is entered into a database. The system then determines whether the customer is in the same geographical area as the vendor and if so pushes to the customer advertising relating to the vendor.

### GENERAL

In one embodiment, a system may be provided for use with a source device that accepts data from a user. The system may be configured to push the data from the source device to one of a plurality of destination devices used by a target user and accessible to the system, the system comprising:
a global push server component configured to communicate with the source device over a first network connection and communicable with the plurality of destination devices over respective second networks, the global push server component having a number of modules comprising:
   a delivery module for coordinating delivery of the data to one of the plurality of destination devices that is available for receiving the data;
   a presence module interfacing with the delivery module configured to retrieve over the respective second networks presence information about the plurality of destination devices and to inform the delivery module which of the destination devices is available for receiving the data;
   a preference and data module interfacing with the delivery module configured to store prioritization rules for the plurality of destination devices prioritizing the devices relative to each other and to provide the prioritization rules to the delivery module; and
   a translation module interfacing with the delivery module configured to translate the data into a form receivable by a selected one of the plurality of destination devices
   wherein the delivery module is configured to deliver the data to one of the plurality of destination devices that is available for receiving the data after determining which of the available mobile devices is the highest priority destination device based on the prioritization rules.

In another embodiment, a method may be provided for delivering data from a source device to one of a plurality of destination devices used by a target user. The method may comprise the steps of receiving at a server identification information for the user of the plurality of destination devices and data to be sent to the user; retrieving preference data defining prioritization rules for the delivery of the data to one of the plurality of destination devices, said preference data prioritizing the devices relative to each other; retrieving presence data reporting the availability of each of the plurality of destination devices for receiving the data; selecting which of the plurality of destination devices to deliver the data to based on the presence data and the preference data; and delivering the data to the selected destination device.

There may also be provided a computer program product for delivering data from a source device to one of a plurality of destination devices, the computer program product.comprising a computer readable medium storing program code which when executed by a processor of a computing device or system causes said computing device or system to perform the method described in the foregoing paragraph.

### BRIEF DESCRIPTION OF THE DRAWINGS

Reference will now be made to the drawings, which show by way of example, embodiments of the invention, and in which:

FIG. 1 shows in block diagram form a communication system suitable for pushing information from a source device to an available destination device in accordance with one embodiment;

FIG. 2 shows in diagrammatic form a mobile electronic device suitable for running a client application for pushing information to an available destination device in accordance with one embodiment;

FIG. 3 shows in block diagram form one embodiment of a network configuration for pushing information from a source device to an available destination device in accordance with one embodiment; and

FIG. 4 shows in flow chart form a method for pushing information from a source device to an available destination device in accordance with one embodiment.

In the drawings, like reference numerals denote like elements or features.

### DESCRIPTION OF PREFERRED EMBODIMENTS

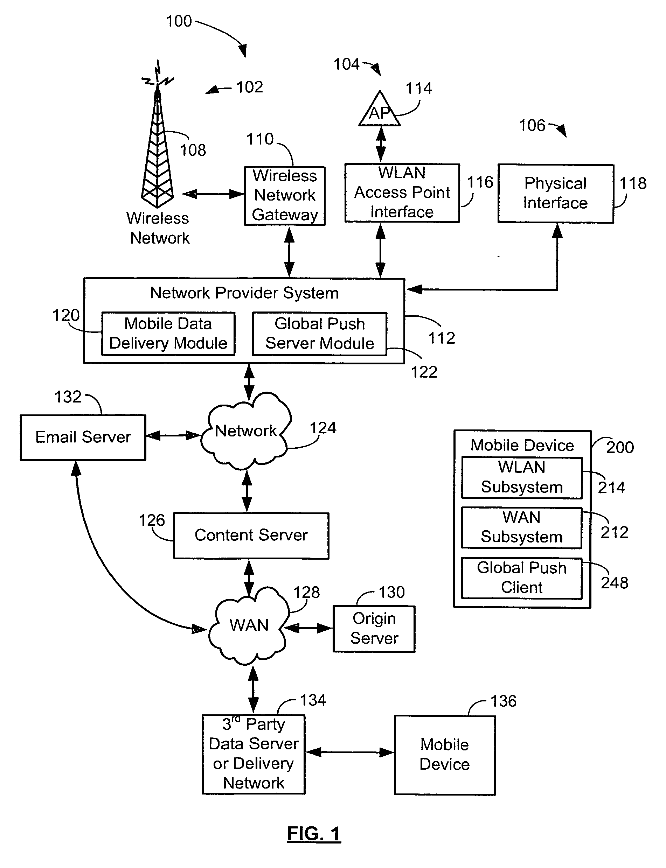

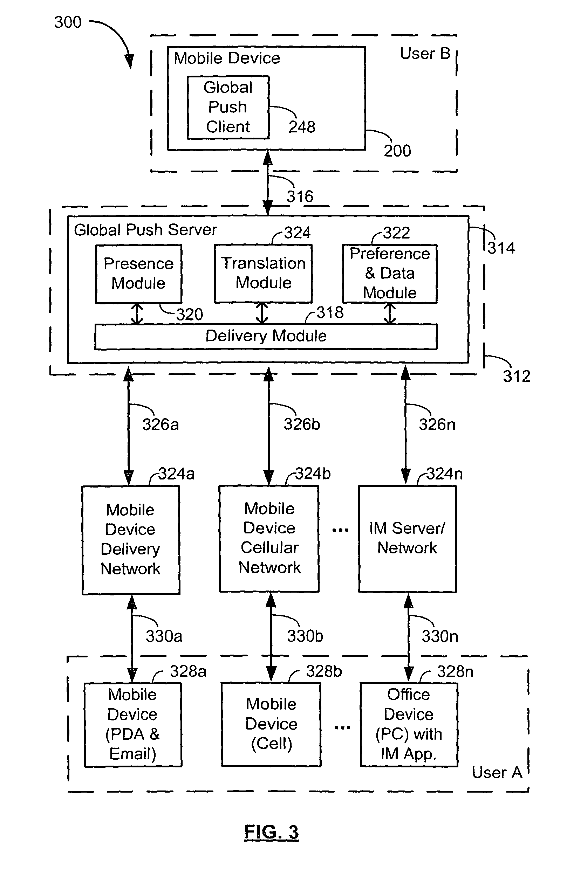

Reference is first made to FIG. 1, which shows a communication system 100 suitable for application to a system and method for pushing information from a source device to an available destination device. The system 100 illustrates a general communications system 100 applicable to the detailed architecture described in more detail in connection with FIG. 3 below. The communication system 100 generally includes one or more mobile electronic devices 200 (only one of which is shown in FIG. 1), a wireless Wide Area Network (WAN) 102, a Wireless Local Area Network (WLAN) 104, and/or other interfaces 106.

Referring to FIG. 1, the wireless WAN 102 may be implemented as a packet-based cellular network that includes a number of base stations 108 (one of which is shown in FIG. 1) where each of the base stations 108 provides wireless Radio Frequency (RF) coverage to a corresponding area or cell. The wireless WAN 102 is typically operated by a cellular network service provider that sells subscription packages to users of the mobile electronic devices 200. The wireless WAN 102 comprises a number of different types of networks, for example, Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network) or various other third generation networks such as EDGE (Enhanced Data rates for GSM Evolution) or UMTS (Universal Mobile Telecommunications Systems).

As shown in FIG. 1, the communications system 100 also includes a wireless network gateway 110 and one or more network provider systems 112. The wireless network gateway 110 provides translation and routing services between the network provider system(s) 112 and the WAN 102 which facilitates communication between the mobile electronic devices 200 and other devices (not shown) connected, directly or indirectly, to the network provider system 112.

The WLAN 104 comprises a network which in some examples conforms to IEEE 802.11 standards such as 802.11b and/or 802.11g; however, other communications protocols may also be used for the WLAN 104. The WLAN 104 includes one or more wireless RF Access Points (AP) 114 (one of which is shown in FIG. 1) that collectively provide a WLAN coverage area. For the embodiment depicted in FIG. 1, the WLAN 104 is operated by an enterprise (for example, a business or university) and the access points 114 are connected to an access point (AP) interface 116. The AP interface 116 provides translation and routing services between the access points 114 and the network provider system 112 to facilitate communication between two or more of the mobile electronic devices 200 and other devices connected, directly or indirectly, to the network provider system 112. The AP interface 116 is implemented using a computer, for example, a server running a suitable computer program or software.

According to one embodiment, the other interfaces 106 may be implemented using a physical interface indicated by reference 118. The physical interface 118 includes an Ethernet, Universal Serial Bus (USB), Firewire, or infrared (IR) connection implemented to exchange information between the network provider system 112 and the mobile electronic device 200.

The network provider system 112 comprises a server or server modules or a number of servers or server modules which are located behind a firewall (not shown). In one embodiment, the network provider system 112 includes a number of modules including a mobile data delivery module 120 and a global push server module 122. In one embodiment, the various modules may be implemented as a number of services running on a single server or as a number of interconnected servers each running a software program to implement the functionality of the respective module. The network provider system 112 provides access for the mobile electronic devices 200, through either the wireless WAN 102, the WLAN 104, or the other connection 106 to the devices connected, for example, through an enterprise network 124 (e.g., an intranet), to the network provider system 112. In one embodiment, the data delivery module 120 and the global push server module 122 are implemented on a computer, such as the network provider system 112.

The enterprise network 124 comprises a local area network, an intranet, the Internet, a direct connection, or combinations thereof. According to one embodiment, the enterprise network 124 comprises an intranet for a corporation or other type of organization. In at least some example embodiments, the network provider system 112 is part of the enterprise network 124, and is located behind a corporate firewall and connected to the wireless network gateway 110 through the Internet. As shown in FIG. 1, an application/content server 126 may be connected to the enterprise network 124 and also to another network, for example a Wide Area Network (WAN), indicated by reference 128. In some embodiments, an email server 132 and/or the content server 126 form part of the enterprise network 124. The WAN 128 may further connect to other networks. In one embodiment, the WAN 128 comprises or is configured with the Internet, a direct connection, a LAN, a wireless communication link, or any combination thereof. Content providers, such as Web servers, may be connected to the WAN 128, an example of which is shown in FIG. 1 as an origin server, indicated by reference 130. Other devices or external networks may be connected to WAN 128 such as a third party data server or delivery network 134. The third party data server/delivery network 134 may be responsible for delivering content to/from specific mobile devices such as a mobile device 136. In one embodiment, the third party data server 134 may be a cellular phone provider network and the mobile device 136 may be a cellular phone. The WAN 128 may be connected to any number of third party servers and associated electronic devices. In one example configuration, the email server 132 is connected to the enterprise network 124 and the email server 132 is configured to direct or redirect email messages received over the WAN 128 and internally within the enterprise network 124 to be addressed to the mobile electronic device(s) 200. While the global push server module 122 is shown implemented in the network provider system 112, the global push server module 122 acts as a service mediator and may be implemented on any server within the system 100.

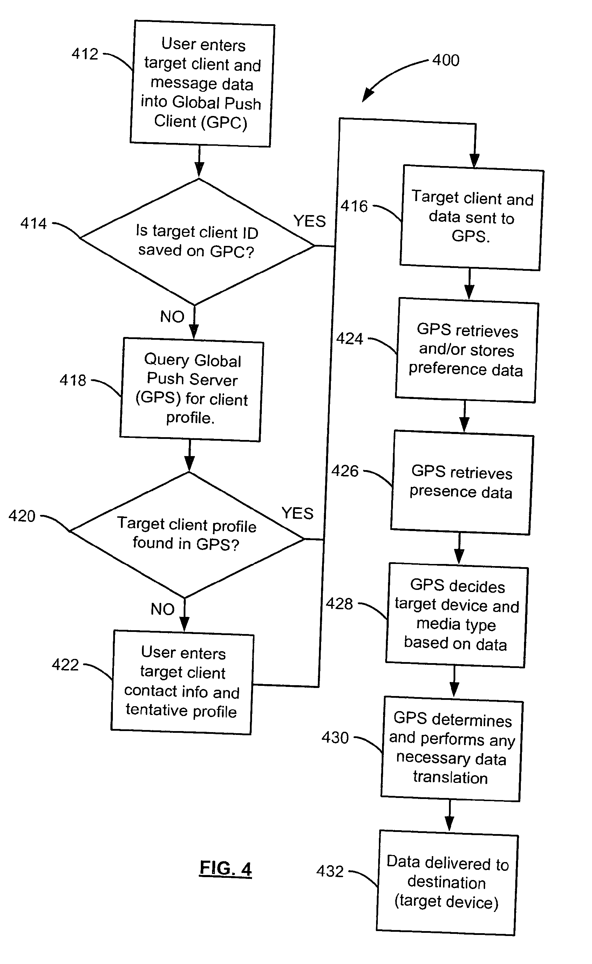

According to one embodiment, the mobile data delivery module 120 provides connectivity between the wireless WAN 102 and the WLAN 104 and the other connection 106 and devices and/or networks connected directly or indirectly to the network provider system 112. In one embodiment, the connectivity provided may be HTTP based connectivity providing an Internet based service connection to devices connected to the wireless WAN 102, the WLAN 104, or the other connection 106 and devices and/or networks connected directly or indirectly to the network provider system 112. The network 124, the application/content server 126, the WAN 128, and the origin server 130, are individually and/or collectively in various combinations a content source for the network provider system 112. It will be appreciated that the system shown in FIG. 1 comprises but one possible communication network or configuration of a multitude of possible configurations for use with the mobile electronic devices 200, the system described below in connection with FIG. 3, and the method described below in connection with FIG. 4.

The mobile electronic devices 200 are configured to operate, as described above with reference to FIG. 1, within the wireless WAN 102 and/or the WLAN 104. As shown in FIG. 1, the mobile electronic device 200 is configured with or includes a WAN communications subsystem 212 for communicating with the wireless WAN 102 and/or a WLAN communications subsystem 214 for communicating with the access points 114 of the WLAN 104. The mobile electronic device 200 also includes a global push client 248 for coordinating communications with the global push server module 122.

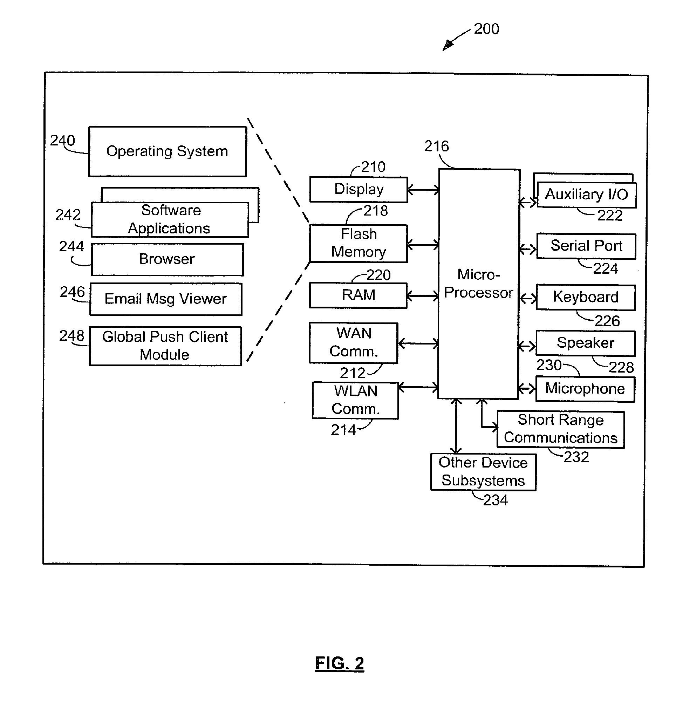

Reference is next made to FIG. 2, which shows an embodiment of the mobile electronic device suitable for application to a system and method for pushing information from a source device to an available destination device and is indicated generally by reference 200. The mobile electronic device 200 includes a display module 210, the wireless WAN communication subsystem 212 for two-way communications with the wireless WAN 102 (FIG. 1), and the WLAN communications subsystem 214 for two-way communications with the WLAN 104 (FIG. 1). According to one embodiment, the mobile electronic device 200 need not include both the wireless WAN communications subsystem 212 and the WLAN communications subsystem 214. The mobile electronic device may have either one or both of the wireless WAN communications subsystem 212 and the WLAN communications subsystem 214, depending on the design criteria of a particular application. According to one embodiment, the communications subsystems 212 and 214 include respective antennas (not shown), RF transceivers (not shown), and some signal processing capabilities, implemented, for example, by a digital signal processor (not shown). The mobile electronic device 200 also includes a microprocessor 216 which is suitably programmed to control the overall operation and functions of the mobile electronic device 200, which are described in more detail below. The mobile electronic device 200 includes peripheral devices or subsystems such as a flash memory 218, a random access memory (RAM) 220, an auxiliary input/output (I/O) subsystem 222 (e.g., an external communications link such as Ethernet), a serial port 224 (e.g., a USB port), an input device 226 (e.g., a keyboard or keypad), a speaker 228, a microphone 230, a short-range communications subsystem 232 (e.g., an infrared transceiver, wireless bus protocol such as a Bluetooth system, or any other means of local wireless communications), and any other device subsystems generally designated by reference 234.

The microprocessor 216 operates under stored program control with code or firmware being stored in the flash memory 218 (or other type of non-volatile memory device or devices). The flash memory 218 includes stored programs (e.g., firmware) including an operating system program or code module 240 and other programs or software applications indicated generally by reference 242. The software applications 242 for a Web-enabled embodiment or implementation of the mobile electronic device 200 comprise a Web browser 244 and an email message viewer 246. The software applications 242 for embodiments of the mobile electronic device 200 that include the ability to push information to an available destination device include the global push client module 248, for interacting with a server such as the global push server module 122 (FIG. 1). Each of the software applications 242 may include layout information defining the placement of particular fields, such as text fields, input fields, etc., in a user interface for the software applications 242. The operating system code 240, code for specific device applications 242, or code components thereof may be temporarily loaded into a volatile storage medium such as the RAM 220 during operation of the mobile electronic device 200. Received communication signals and other data with information may also be stored in the RAM 220.

The stored program control (i.e., software applications 242) for the microprocessor 216 also includes a predetermined set of applications or code components or software modules that control basic device operations, for example, data and voice communication related applications such as the global push client module 248, which are normally installed on the mobile electronic device 200 as the software applications 242 during the manufacturing process. Further applications may also be loaded (i.e., downloaded) onto the mobile electronic device 200 through the operation of networks described above for FIG. 1, the auxiliary I/O subsystem 222, the serial port 224, or the short-range communications subsystem 232. The downloaded code module or components are then installed by the user (or automatically) in the RAM 220 or the non-volatile program memory (e.g., the flash memory 218).

The serial port 224 comprises a USB type interface port for interfacing or synchronizing with another device, such as, a desktop computer (not shown). The serial port 224 is used to set preferences through an external device or software application. The serial port 224 is also used to extend the capabilities of the mobile electronic device 200 by providing for information or software downloads, including user interface information, to the mobile electronic device 200 other than through a wireless communication network, described above for FIG. 1.

Reference is next made to FIG. 3 which shows in block diagram form one embodiment of a network architecture or configuration 300 for pushing information from a source device to an available destination device in accordance with one embodiment. The network 300 includes the mobile electronic device 200 having the global push client 248. The mobile electronic device 200 communicates with a network 312 having a global push server 314 using a network connection 316. In one embodiment, the network connection 316 comprises the wireless WAN 102, the WLAN 104, or the other connection 106, shown in FIG. 1. However, the network connection 316 may be any suitable connection to interface the mobile electronic device 200 with the global push server 314. The global push server 314 either comprises a number of servers or has a number of software modules or components installed thereon and interacting with each other for controlling delivery of data supplied by the global push client 248 to a destination device. The servers or software modules of the global push server 314 include a delivery module 318, a presence module 320, a preference and data module 322, and a translation module 324. The global push server 314 is connected to a number of networks responsible for the delivery of data, indicated by references 324 and individually indicated as 324a, 324b, .., 324n, using respective connections 326, individually indicated as 326a, 326b, .., 326n. The networks 324 ultimately provide service to a number of electronic communications devices 328, individually indicated as 328a, 328b, .., 328n, by way of respective connections 330, individually indicated as 330a, 330b, ..., 330n. The networks 324 are responsible for delivering data to the respective electronic communication devices 328.

In one embodiment, the device 328a is a mobile device such as a personal digital assistant (PDA) offering wireless email services (e.g., such as the mobile electronic device 248) and serviced by the respective mobile device delivery network 324a, the device 328b is a cellular phone serviced by the respective mobile device cellular network 324b, and the device 328n is an office PC running an instant messenger (IM) application and serviced by the respective IM service network 324n. In this embodiment, the connection 330a is a wireless network gateway and associated transceivers, the connection 330b is a wireless cellular network gateway and associated transceivers, and the connection 330n is an enterprise network and/or the Internet providing connectivity between the IM service network 324n and the office PC running the IM application 328n. For the purposes of the following examples, all of the devices 328 are owned or used by a single user, referred to as user A. The mobile electronic device 200 is owned by a different user, referred to as user B.

User B having the mobile electronic device 200 uses the global push client 248 to send data (e.g., messages) to the devices 328 belonging to user A. User B having the global push client 248 typically has his identity preconfigured with the global push server 314 either at the time that the mobile electronic device 200 is acquired and commissioned by user B or when the global push client 248 is installed on the mobile electronic device 200 and configured to work in conjunction with the global push server 314. The preference and data module 322 stores contact information related to users of the global push server 314 (e.g., all users such as user B who have the global push clients 248 and/or other mobile devices similar to the mobile devices 328) such as the various ways in which the users may be contacted, including email addresses, telephone numbers, IM destination addresses, facsimile numbers, pager numbers, etc. The preference and data module 322 also stores prioritization rules for the devices 328 that prioritizes how the user wishes to be contacted at any given time. The prioritization rules entered by users such as user B may prioritize the devices differently, depending on the time of day of an incoming message, etc. The prioritization rules may be updated by the user B using the global push client 248 or an Internet WEB page that is set up to grant user B access to his configuration settings stored in the preference and data module 322. The prioritization rules may be defined in any suitable way, according to the principles of data prioritization and determination known by those skilled in the art. In one embodiment, the preference and data module 322 also functions as a service mediator, choosing between various available services and/or mediums when multiple services are available, or multiple mediums are available over a particular service. The service mediation role of the preference and data module 322 may be fully configurable with preference data and/or other rules, such as bandwidth usage maximization. A user is not required to have a global push client 248 in order to create an account in the preference and data module 322 and enter his contact information and define priortization rules for the devices specified in the contact information. User A may also have a preconfigured profile stored in the preference and data module 322, although this is not required. User B, when electing to send information to user A, may either select user A's pre-existing profile that was completed by user A or user B may create a tentative profile for user A on the fly that includes at least some of user A's contact information. If user B creates a tentative profile for user A, user B may either create tentative prioritization rules for user A or create no prioritization rules for user A. Alternatively, when user B creates a tentative profile for user A, the global push server 314 may contact user A prompting user A to complete additional contact information and define prioritization rules to be stored in the preference and data module 322.

User B begins the process of sending data to user A by selecting, within the global push client 248, user A as a destination for the data user B will either enter into the global push client 248 or select on the mobile electronic device 200, if the data user B wishes to send to user A is already saved on the mobile electronic device 200. In one embodiment, user B makes an implicit choice as to the medium user B prefers to use for the communication, by either providing a voice message by speaking into a microphone of the mobile electronic device 200 or by entering text using a keyboard or input device of the mobile electronic device 200. I n another embodiment, user B makes an explicit choice as to the medium user B prefers to use for the communication by entering data in one medium (e.g., either text or voice) and by selecting delivery using another medium. User B completes the data entry and/or selection and chooses to send the data to user A. The global push client 248 then forwards this information on to the global push server 314 using the network connection 316.

When the global push server 314 receives data destined for one of the mobile devices 328, the presence module 320 of the global push server 314 retrieves the statuses of the devices 328 used by user A from the networks 324 over respective connections 326 and determines how user A is currently accessible. For example, user B may have entered a text message destined for user A, the mobile device 328a may be currently unavailable, but the cellular phone 328b and the IM application on the PC 328n may be currently available. The delivery module 318 retrieves the presence data relating to user A provided by the presence module 320 and determines that user A is currently only available via the devices 328b and 328n. The delivery module 318 next retrieves any preference data related to user A from the preference and data module 322. Alternatively, if the user A previously had no profile stored in the preference and data module 322 and user B supplied a tentative profile for user A, a record is created for user A and preference data is then stored in the preference and data module 322. The delivery module 318 then determines which of the available mobile devices 328 is the highest priority delivery avenue based on any prioritization rules supplied. If the highest priority delivery device between the available cell phone 328b and the I M application 328n is the cell phone 328b, the delivery module 318 next sends the text message to the translation module 324 to translate the message from text to voice, if it is preferred, as determined by the preference and data module 322, to deliver the message via either an automated telephone call or voice message. Alternatively, the text message could be delivered to the cell phone 328b using either SMS or MMS. If a voice message is preferred, once the translation module delivers the translated message back to the delivery module 318, the delivery module 318 sends the translated voice message to the cellular phone 328b using the mobile device cellular network 324b. An SMS or MMS text message would be delivered to the cellular phone 328b using the same delivery route, i.e., using the mobile device cellular network 324b. If the highest priority delivery device between the cell phone 328b and the IM application 328n is the IM application 328n, the delivery module 318 does not have to translate the text message for delivery. The delivery module 318 logs into the IM service server 324n using a suitable login and delivers the text message to the IM application 328n. In one embodiment, the delivery module 318 has its own login for the IM service server 324n and delivers the text message to the user A with identifying information showing that the message was delivered from the delivery module 318 account but originating from the user B. In another embodiment, the preference and data module 322 includes information containing user B's login information for the I M service server 324n and the delivery module 318 logs into the IM service server 324n using user B's login, if user B had configured the preference and data module 322 with the login, password, and authority to do so. The system 300 also has the ability to facilitate bi-directional communications such as the delivery of a response tendered by one of the mobile devices 328 back to the global push client 248.

Reference is next made to FIG. 4 which shows in flow chart form a method 400 for pushing information from a source device (e.g., the global push client 248 of the mobile electronic device 200 used by user B, shown in FIG. 3) to an available destination (e.g., any of the devices 328 used by user A) in accordance with one embodiment. At a first step 412, the user, such as user B, enters target client information, such as a user I D for user A, and data to be sent to user A into the global push client. The global push client then checks to see if the target client I D is saved locally on the mobile electronic device (step 414). If the target client ID is present on the mobile electronic device, the target client I D and the entered data is sent to a global push server, such as the global push server 314 (step 416). If the target client ID is not found, the global push client queries the global push server preference and data module, such as the module 322 (step 418), to see if the user A is already registered and has already provided a profile prioritizing the delivery of data to his devices (step 420). The global push server returns the results of the query to the global push client and prompts user B to enter user A's contact information if the user A is not already registered in the preference and data module (step 422). At this point user B may also provide a tentative profile prioritizing the devices associated with user A. If a client profile for user A was found at the step 420, the step 422 is skipped. Next the target client ID (or user information for new target clients) and data is sent to the global push server (step 416). Next, the global push server (e.g., as coordinated by the delivery module 318) retrieves the preference data, for example, from the preference and data module 322 (step 424). The preference data comprises preferences as to delivery priorities pertaining to the user A's mobile devices, such as the devices 328, established by the user A and/or the user B. Next, the global push server retrieves the presence data, for example, from the presence module 320 (step 426). The presence data contains information such as which of the mobile devices 328 are currently available for contacting the user A. The order of the steps 424 and 426 is unimportant and can be performed interchangeably or simultaneously. Once the global push server has the preference data and the presence data, the global push server decides the method of delivery at a step 428 (e.g., which of the devices 328 to use to contact the user A based on which of the devices 328 are currently available and which of the devices 328 that are currently available is at the top of the priority list). Once the global push server has determined the method of delivery to be used, for example which of the devices 328 to use, the global push server determines if any data translation is needed and performs and required data translation using, for example, the translation module 324 (step 430). Data translation is needed when the data is presented to the global push server by the global push client in a medium which is not the same as the medium of the device to which the data is to be delivered. In one example, a voice message may be presented to the global push server but delivery may be to an email application running on a PC. In this case, the translation module could translate the voice message into a text message using a voice recognition component and send the message as text within an email. Alternatively, no translation could be used and the voice message could be sent as an audio attachment to the email. The decision between whether to deliver the message as text or voice (e.g., service selection) is made by a service mediation function of the preference and data module 322, which may be based on preference data or other factors such as bandwidth efficiency, etc. Finally, at a step 432, the data is sent and delivered to the elected device 328 using the respective network 324.

The system 300 for pushing information from a source device to an available destination device combines a service independent interface or unified user interface (e.g., the global push client 248) at the client level and service mediation functionality at a server (e.g., the global push server 314). The system 300 provides for the interoperability of different data exchange formats such as instant messaging, email, fax, phone, etc. When using the global push client 248, a user may send messages to or communicate with other users, who may or may not have the global push client 248, via a priority, preference, and availability based destined service. The global push client 248 serves to achieve a unified user experience where the client 248 is not a specialized application for a specific service, but is a generic client that provides data to any desired destination device of a particular selected user by providing the contact information of the desired client device to the preference and data module 322, if such contact information is not already saved in the preference and data module 322. The global push server 314 determines the available resources for a particular user such as services, networks and devices, and serves to guarantee service availability with the destined users via the available resources. The presence module 320 of the global push server 314 checks the availability of a particular destination device 328 before activating an associated service for the destined user, enabling the system 300 to improve the connectivity to or availability of the destined users. Additionally, service reliability and network performance is enhanced since the system 300 reduces access failures or attempts to communicate with unavailable devices. As a result, the system 300 improves service reliability and network performance as less bandwidth is wasted on failed communication attempts. The global push client 248 also serves to achieve quick and low cost service deployment. Since the global push client 248 is abstracted from the underlying services running on the global push server 314, a new service deployment or a change of existing services related to the use of the global push client 248 and being used on the mobile electronic devices 200 do not need anything other than a software update to the underlying services running on the global push server 314.

Providing a unified user interface such as the global push client 248 is desirable, particularly with services provided over wired and wireless IP networks, where the most growth is currently occurring. Because a user has many ways to contact others through a multitude of services and via several networks and devices, the complexity of organizational communications has increased and the usability and the accessibility of organizational communications has begun to decrease. Additionally, service and network reliability issues can hinder organizational communications since a user may be inaccessible via one medium, unbeknownst to his colleagues, when the user is accessible via another medium. One embodiment of the system 300 serves to create a unified user experience that integrates with and enables other legacy or new services to be reachable along with existing services using the global push client 248 regardless of media type, service, devices, and networks required or involved. Providing a global push client 248 also addresses the issue of resource limitations on mobile electronic devices (e.g., memory size) such as the mobile electronic device 200. Since mobile electronic devices typically have a limited memory size that limits the number of client applications that may run concurrently, the use of the global push client 248 conserves memory or allows for other client applications to be run at the same time since fewer client applications are needed. Since the global push client 248 is able to handle diverse destination services through a unified connection (i.e., the connection 316, shown in FIG. 3) with the global push server 314, the mobile electronic device does not need many embedded client applications or interfaces and the various client service enabling applications, such as service level protocol stacks, may be removed. Therefore, the mobile electronic device implementing one or more of the embodiments described above needs less memory and may be lighter than conventional mobile devices.

The system 300 is operable under a number of different configurations. In one embodiment, the global push client 248 may be installed on any computing device such as a personal digital assistant (PDA), personal computer (PC) or cellular phone. A device having the global push client 248 may also function as one of the mobile devices 328 (i.e., as a destination device). In this case, the mobile device delivery network 324 may not be needed for some destination devices enabled with the global push client 248 and the connection between these devices with the global push server 314 may be similar to the network connection 316. Communications through the system 300 may occur bidirectionally. Additionally, return communication from the mobile devices 328 destined for the mobile electronic device 200 may also be subject to prioritization, such as in the case where the mobile electronic device 200 is no longer available when a return communication destined for the mobile electronic device 200 arrives at the global push server 314. Such reverse prioritization and availability of alternative delivery means is available because the global push server 314 will typically have a user profile for the user of the global push client 248 stored in the preference and data module 322.

The above-described embodiments of the present application are intended to be examples only. Alterations, modifications and variations may be effected to the particular embodiments by those skilled in the art without departing from the scope of the application, which is defined by the claims appended hereto.

## Claims

1. A system (300) for use with a source device (200) that accepts data from a user, the system (300) being configured to push the data from the source device (200) to one of a plurality of destination devices (328) used by a target user and accessible to the system (300), the system (300) comprising:
a global push server component (314) configured to communicate with the source device (200) over a first network connection and communicable with the plurality of destination devices (328) over respective second networks, the global push server component (314) having a number of modules comprising:
a delivery module (318) for coordinating delivery of the data to one of the plurality of destination devices (328) that is available for receiving the data;
a presence module (320) interfacing with the delivery module (318) configured to retrieve over the respective second networks presence information about the plurality of destination devices (328) and to inform the delivery module (318) which of the destination devices (328) is available for receiving the data;
a preference and data module (322) interfacing with the delivery module (318) configured to store prioritization rules for the plurality of destination devices (328) prioritizing the devices relative to each other and to provide the prioritization rules to the delivery module (318); and
a translation module (324) interfacing with the delivery module (318) configured to translate the data into a form receivable by a selected one of the plurality of destination devices (328)
wherein the delivery module (318) is configured to deliver the data to one of the plurality of destination devices (328) that is available for receiving the data after determining which of the available mobile devices (328) is the highest priority destination device based on the prioritization rules.

2. The system according to claim 1, further comprising:
a global push client module (248) for use with the source device (200), the global push client module (248) for accepting the data supplied by the user to be sent to the global push server component (314) over the first network connection.

3. The system according to claim 1 or claim 2, wherein the plurality of destination devices (328) comprise any of a wireless email enabled mobile device, a cellular phone, an instant messenger application running on a personal computer, an instant messenger application running on a mobile device, a multimedia enabled electronic device, a voice enabled electronic device, a personal computer, a facsimile machine, and/or a telephone.

4. The system according to any one of claims 1 to 3, wherein each of the respective second networks comprises:
a service provider network responsible for providing connectivity with the respective destination device;
a network connection connecting the global push server component (314) with the respective service provider network; and
a communications connection between the service provider network of the respective destination device and the respective destination device.

5. The system according to any one of claims 1 to 4, wherein the source device (200) is a wireless mobile electronic device and the data provided to the source device (200) for delivery to one of the plurality of destination devices (328) comprises a voice message and/or a text message.

6. The system according to any one of claims 1 to 5, wherein the prioritization rules are a set of rules prioritizing the plurality of destination devices (328) for data delivery, the rules being defined in advance by the user of plurality of destination devices.

7. The system according to any one of claims 1 to 5, wherein the prioritization rules are a set of rules prioritizing the plurality of destination devices (328) for data delivery, the rules being defined in advance by the user of the source device (200) when the user requests that the data be sent to the push server component (314).

8. The system according to any one of claims 1 to 7, wherein one of the plurality of destination devices (328) comprises an instant messenger application running on a computing device and the delivery module (318) is arranged to log into an instant messenger service provided by a service provider of the instant messenger service using login data saved in the preference and data module (322) and to send the data to the instant messenger application.

9. The system according to claim 8, wherein the login data comprises data provided by the user of the source device (200).

10. The system according to claim 8, wherein the global push server component (314) has a unique login ID saved as the login data and the user is identified as the originating user sending the data.

11. A method (400) of pushing data from a source device (200) to one of a plurality of destination devices (328) used by a target user, the method comprising:
receiving at a global push server identification information for the user of the plurality of destination devices (328) and data to be sent to the user;
retrieving preference data defining prioritization rules for the delivery of the data to one of the plurality of destination devices (328), said preference data prioritizing the devices relative to each other;
retrieving presence data reporting the availability of each of the plurality of destination devices (328) for receiving the data;
selecting one of the plurality of destination devices (328) determined to be available, based on the presence data, and having the highest priority based on the preference data; and
delivering the data to the selected destination device.

12. The method (400) according to claim 11, further comprising the steps of, before the step of delivering the data:
determining if the preferred data format of the selected destination device is different from the data format of the data accepted from the user; and
translating the data into the preferred format of the selected destination device if the preferred data format to be received by the selected destination device is different from the data format of the data accepted from the user.

13. The method (400) according to claim 12, wherein the data format comprises a typed text message and/or a recorded voice message.

14. The method (400) according to claim 12 or claim 13, further comprising the steps of, before the step of transferring the user identification and the data to a server:
querying the server responsible for delivering the data to the user to see if the identification information and the preference data for the user exists; and
accepting tentative identification information and preference data for the user to be stored on the server responsible for delivering the data to the user.

15. A computer program product for delivering data from a source device (200) to one of a plurality of destination devices (328), the computer program product comprising a computer readable medium storing program code which when executed by a processor of a computing device or system causes said computing device or system to perform the method of any one of claims 11 to 14.

## Patentansprüche

1. System (300) zur Verwendung mit einer Ausgangsvorrichtung (200), die Daten von einem Benutzer annimmt, wobei das System (300) konfiguriert ist zum Verschieben ("push") der Daten von der Ausgangsvorrichtung (200) an eine aus einer Vielzahl von Zielvorrichtungen (328), die von einem Ziel-Benutzer verwendet werden und für das System (300) zugänglich sind, wobei das System (300) aufweist:
eine globale "Push-Server"-Komponente (314), die konfiguriert ist, um mit der Ausgangsvorrichtung (200) über eine erste Netzwerkverbindung zu kommunizieren und mit der Vielzahl von Zielvorrichtungen (328) über jeweilige zweite Netzwerke kommunizieren kann, wobei die globale "Push-Server"-Komponente (314) eine Anzahl von Modulen hat, die aufweisen:
ein Liefer-Modul (318) zum Koordinieren einer Lieferung der Daten an eine der Vielzahl von Zielvorrichtungen (328), die zum Empfangen der Daten verfügbar ist;
ein Präsenz-Modul (320), in Verbindung mit dem Liefer-Modul (318), das konfiguriert ist, über die jeweiligen zweiten Netzwerke Präsenzinformation über die Vielzahl von Zielvorrichtungen (328) abzurufen und das Liefer-Modul (318) zu informieren, welche der Zielvorrichtungen (328) zum Empfangen der Daten verfügbar ist;
ein Präferenz- und Daten-Modul (322), in Verbindung mit dem Liefer-Modul (318), das konfiguriert ist, Priorisierungsregeln für die Vielzahl von Zielvorrichtungen (328) zu speichern, die die Vorrichtungen relativ zueinander priorisieren, und die Priorisierungsregeln an das Liefer-Modul (318) zu liefern; und
ein Übersetzungs-Modul (324), in Verbindung mit dem Liefer-Modul (318), das konfiguriert ist, die Daten in eine Form zu übersetzen, die durch eine ausgewählte der Vielzahl von Zielvorrichtungen (328) empfangen werden kann,
wobei das Liefer-Modul (318) konfiguriert ist, die Daten an eine der Vielzahl von Zielvorrichtungen (328) zu liefern, die zum Empfangen der Daten verfügbar ist, nach einer Bestimmung, welche der verfügbaren mobilen Vorrichtungen (328) die Zielvorrichtung mit der höchsten Priorität ist, basierend auf den Priorisierungsregeln.

2. System gemäß Anspruch 1, das weiter aufweist:
ein globales "Push-Client"-Modul (248) zur Verwendung mit der Ausgangsvorrichtung (200), wobei das globale "Push-Client"-Modul (248) vorgesehen ist zum Annehmen der Daten, die von dem Benutzer geliefert werden, zum Senden über die erste Netzwerkverbindung an die globale "Push-Server"-Komponente (314).

3. System gemäß Anspruch 1 oder Anspruch 2, wobei die Vielzahl von Zielvorrichtungen (328) eines aufweist aus einer drahtlosen Email-fähigen mobilen Vorrichtung, einem zellularen Telefon, einer "Instant Messenger"-Anwendung, die auf einem Personalcomputer läuft, einer "Instant Messenger"-Anwendung, die auf einer mobilen Vorrichtung läuft, einer Multimedia-fähigen elektronischen Vorrichtung, einer Sprache-fähigen elektronischen Vorrichtung, einem Personalcomputer, einer Faksimile-Maschine und/oder einem Telefon.

4. System gemäß einem der Ansprüche 1 bis 3, wobei jedes der jeweiligen zweiten Netzwerke aufweist:
ein Diensteanbieter-Netzwerk, das zuständig ist zum Bereitstellen von Konnektivität mit der jeweiligen Zielvorrichtung;
eine Netzwerkverbindung, die die globale "Push-Server"-Komponente (314) mit dem jeweiligen Diensteanbieter-Netzwerk verbindet; und
eine Kommunikationsverbindung zwischen dem Diensteanbieter-Netzwerk der jeweiligen Zielvorrichtung und der jeweiligen Zielvorrichtung.

5. System gemäß einem der Ansprüche 1 bis 4, wobei die Ausgangsvorrichtung (200) eine drahtlose mobile elektronische Vorrichtung ist und die Daten, die an die Ausgangsvorrichtung (200) geliefert werden zur Lieferung an eine der Vielzahl von Zielvorrichtungen (328), eine Sprachnachricht und/oder eine Textnachricht aufweisen.

6. System gemäß einem der Ansprüche 1 bis 5, wobei die Priorisierungsregeln ein Satz von Regeln sind, die die Vielzahl von Zielvorrichtungen (328) für eine Datenlieferung priorisieren, wobei die Regeln im Voraus von dem Benutzer der Vielzahl von Zielvorrichtungen definiert werden.

7. System gemäß einem der Ansprüche 1 bis 5, wobei die Priorisierungsregeln ein Satz von Regeln sind, die die Vielzahl von Zielvorrichtungen (328) für eine Datenlieferung priorisieren, wobei die Regeln im Voraus von dem Benutzer der Ausgangsvorrichtung (200) definiert werden, wenn der Benutzer anfordert, dass die Daten an die "Push-Server"-Komponente (314) gesendet werden.

8. System gemäß einem der Ansprüche 1 bis 7, wobei eine der Vielzahl von Zielvorrichtungen (328) eine "Instant Messenger"-Anwendung aufweist, die auf einer Computervorrichtung läuft, und das Liefer-Modul (318) ausgebildet ist, sich bei einem "Instant Messenger"-Dienst anzumelden, der von einem Diensteanbieter des "Instant Messenger"-Dienstes angeboten wird, unter Verwendung von Anmelde-Daten, die in dem Präferenz- und Daten-Modul (322) gespeichert sind, und die Daten an die "Instant Messenger"-Anwendung zu senden.

9. System gemäß Anspruch 8, wobei die Anmelde-Daten Daten aufweisen, die von dem Benutzer der Ausgangsvorrichtung (200) vorgesehen sind.

10. System gemäß Anspruch 8, wobei die globale "Push-Server"-Komponente (314) eine eindeutige Anmelde-ID hat, die als die Anmelde-Daten gespeichert ist, und der Benutzer als der Ursprungs-Benutzer identifiziert wird, der die Daten sendet.

11. Verfahren (400) zum Verschieben ("push") von Daten von einer Ausgangsvorrichtung (200) an eine aus einer Vielzahl von Zielvorrichtungen (328), die von einem Ziel-Benutzer verwendet wird, wobei das Verfahren aufweist:
Empfangen, an einem globalen Push-Server, von Identifikationsinformation für den Benutzer der Vielzahl von Zielvorrichtungen (328) und von Daten, die an den Benutzer zu senden sind;
Abrufen von Präferenzdaten, die Priorisierungsregeln für die Lieferung der Daten an eine der Vielzahl von Zielvorrichtungen (328) definieren, wobei die Präferenzdaten die Vorrichtungen relativ zueinander priorisieren;
Abrufen von Präsenzdaten, die die Verfügbarkeit jeder der Vielzahl von Zielvorrichtungen (328) zum Empfangen der Daten berichten;
Auswählen einer der Vielzahl von Zielvorrichtungen (328), die als verfügbar bestimmt ist, basierend auf den Präsenzdaten, und die höchste Priorität hat, basierend auf den Präferenzdaten; und Liefern der Daten an die ausgewählte Zielvorrichtung.

12. Verfahren (400) gemäß Anspruch 11, das vor dem Schritt eines Lieferns der Daten weiter die Schritte aufweist:
Bestimmen, ob das bevorzugte Datenformat der ausgewählten Zielvorrichtung verschieden ist von dem Datenformat der Daten, die von dem Benutzer angenommen werden; und
Umwandeln der Daten in das bevorzugte Format der ausgewählten Zielvorrichtung, wenn das bevorzugte Datenformat, das von der ausgewählten Zielvorrichtung empfangen wird, verschieden ist von dem Datenformat der Daten, die von dem Benutzer angenommen werden.

13. Verfahren (400) gemäß Anspruch 12, wobei das Datenformat eine geschriebene Textnachricht und/oder eine aufgezeichnete Sprachnachricht aufweist.

14. Verfahren (400) gemäß Anspruch 12 oder Anspruch 13, das vor dem Schritt eines Übertragens der Benutzeridentifikation und der Daten an einen Server weiter die Schritte aufweist:
Abfragen des Servers, der für das Liefern der Daten an den Benutzer zuständig ist, um zu sehen, ob die Identifikationsinformation und die Präferenzdaten für den Benutzer existieren; und
Annehmen vorläufiger Identifikationsinformation und Präferenzdaten für den Benutzer zum Speichern auf dem Server, der für das Liefern der Daten an den Benutzer zuständig ist.

15. Computerprogrammprodukt zum Liefern von Daten von einer Ausgangsvorrichtung (200) an eine aus einer Vielzahl von Zielvorrichtungen (328), wobei das Computerprogrammprodukt ein computerlesbares Medium aufweist, das Programmcode speichert, der bei Ausführung durch einen Prozessor einer Computervorrichtung oder eines Computersystems die Computervorrichtung oder das Computersystem veranlasst, das Verfahren gemäß einem der Ansprüche 11 bis 14 durchzuführen.

## Revendications

1. Système (300) destiné à être utilisé avec un dispositif source (200) qui accepte des données d'un utilisateur, le système (300) étant configuré pour pousser les données du dispositif source (200) vers l'un d'une pluralité de dispositifs de destination (328) utilisés par un utilisateur cible et accessibles au système (300), le système (300) comprenant :
un composant serveur de "pousser" global (314) configuré pour communiquer avec le dispositif source (200) par l'intermédiaire d'une première connexion de réseau et pouvant être mis en communication avec la pluralité de dispositifs de destination (328) par l'intermédiaire de seconds réseaux respectifs, le composant serveur de "pousser" global (314) ayant un certain nombre de modules, comprenant :
un module de livraison (318) destiné à coordonner la livraison des données à l'un de la pluralité de dispositifs de destination (328) qui est disponible pour la réception des données ;
un module de présence (320) formant une interface avec le module de livraison (318), configuré pour obtenir par l'intermédiaire des seconds réseaux respectifs, des informations de présence relatives à la pluralité de dispositifs de destination (328) et pour indiquer au module de livraison (318) lequel des dispositifs de destination (328) est disponible pour la réception des données ;
un module de préférence et de données (322) formant une interface avec le module de livraison (318), configuré pour stocker des règles de priorité pour la pluralité de dispositifs de destination (328) définissant les priorités des dispositifs les uns par rapport aux autres et pour fournir les règles de priorité au module de livraison (318) ; et
un module de conversion (324) formant une interface avec le module de livraison (318), configuré pour convertir les données en une forme pouvant être reçue par l'un, sélectionné, de la pluralité de dispositifs de destination (328),
dans lequel le module de livraison (318) est configuré pour livrer des données à l'un de la pluralité de dispositifs de destination (328) qui est disponible pour la réception des données après avoir déterminé lequel des dispositifs mobiles disponibles (328) est le dispositif de destination ayant la priorité la plus haute sur la base des règles de priorité.

2. Système selon la revendication 1, comprenant en outre :
un module client de "pousser" global (248) destiné à être utilisé avec le dispositif source (200), le module client de "pousser" global (248) étant destiné à accepter les données fournies par l'utilisateur pour qu'elles soient envoyées au composant serveur de "pousser" global (314) par l'intermédiaire de la première connexion de réseau.

3. Système selon la revendication 1 ou la revendication 2, dans lequel la pluralité de dispositifs de destination (328) comprend l'un quelconque d'un dispositif mobile sans fil à fonctionnalité de courrier électronique, d'un téléphone cellulaire, d'une application de messagerie instantanée fonctionnant sur un ordinateur personnel, d'une application de messagerie instantanée fonctionnant sur un dispositif mobile, d'un dispositif électronique à fonctionnalité multimédia, d'un dispositif électronique à fonctionnalité vocale, d'un ordinateur personnel, d'une machine de télécopie et/ou d'un téléphone.

4. Système selon l'une quelconque des revendications 1 à 3, dans lequel chacun des seconds réseaux respectifs comprend :
un réseau fournisseur de services responsable de l'établissement de la connectivité avec le dispositif de destination respectif ;
une connexion de réseau connectant le composant serveur de "pousser" global (314) au réseau fournisseur de services respectif ; et
une connexion de communication entre le réseau fournisseur de services du dispositif de destination respectif et le dispositif de destination respectif.

5. Système selon l'une quelconque des revendications 1 à 4, dans lequel le dispositif source (200) est un dispositif électronique mobile sans fil et les données fournies au dispositif source (200) pour leur livraison à l'un de la pluralité de dispositifs de destination (328) comprennent un message vocal et/ou un message de texte.

6. Système selon l'une quelconque des revendications 1 à 5, dans lequel les règles de priorité sont un jeu de règles définissant les priorités de la pluralité de dispositifs de destination (328) pour la livraison des données, les règles étant définies à l'avance par l'utilisateur de la pluralité de dispositifs de destination.

7. Système selon l'une quelconque des revendications 1 à 5, dans lequel les règles de priorité sont un jeu de règles définissant les priorités de la pluralité de dispositifs de destination (328) pour la livraison de données, les règles étant définies à l'avance par l'utilisateur du dispositif source (200) lorsque l'utilisateur demande que les données soient envoyées au composant serveur de "pousser" (314).

8. Système selon l'une quelconque des revendications 1 à 7, dans lequel l'un de la pluralité de dispositifs de destination (328) comprend une application de messagerie instantanée fonctionnant sur un dispositif informatique et le module de livraison (318) est conçu pour se connecter à un service de messagerie instantanée fourni par un fournisseur de services du service de messagerie instantanée en utilisant des données d'ouverture de session sauvegardées dans le module de préférences et de données (322) et pour envoyer les données à l'application de messagerie instantanée.

9. Système selon la revendication 8, dans lequel les données d'ouverture de session comprennent des données fournies par l'utilisateur du dispositif source (200).

10. Système selon la revendication 8, dans lequel le composant serveur de "pousser" global (314) a un ID d'ouverture de session unique sauvegardé en tant que donnée d'ouverture de session et dans lequel l'utilisateur est identifié comme étant l'utilisateur à l'origine de l'envoi des données.

11. Procédé (400) consistant à pousser des données d'un dispositif source (200) vers l'un d'une pluralité de dispositifs de destination (328) utilisés par l'utilisateur cible, le procédé consistant à :
recevoir une information d'identification de serveur de "pousser" global destinée à l'utilisateur de la pluralité de dispositifs de destination (328) et des données devant être envoyées à l'utilisateur ;
extraire des données de préférence définissant des règles de priorité pour la livraison des données à l'un de la pluralité de dispositifs de destination (328), lesdites données de préférence définissant les priorités des dispositifs les uns par rapport aux autres ;
extraire des données de présence signalant la disponibilité de chacun de la pluralité de dispositifs de destination (328) pour la réception des données ;
sélectionner l'un de la pluralité de dispositifs de destination (328) dont il est déterminé qu'ils sont disponibles sur la base des données de présence et ayant la priorité la plus haute sur la base des données de préférence ; et
livrer les données au dispositif de destination sélectionné.

12. Procédé (400) selon la revendication 11, comprenant en outre les étapes consistant à, avant l'étape de livraison des données :
déterminer si le format de données préféré du dispositif de destination sélectionné est différent du format de données des données acceptées en provenance de l'utilisateur ; et
convertir les données au format préféré du dispositif de destination sélectionné si le format de données préféré devant être reçu par le dispositif de destination sélectionné est différent du format de données des données acceptées en provenance de l'utilisateur.

13. Procédé (400) selon la revendication 12, dans lequel le format de données comprend un message de texte saisi et/ou un message vocal enregistré.

14. Procédé (400) selon la revendication 12 ou la revendication 13, comprenant en outre les étapes consistant à, avant l'étape de transfert de l'identification de l'utilisateur et des données à un serveur :
interroger le serveur responsable de la livraison des données à l'utilisateur pour déterminer si les informations d'identification et le données de préférence destinées à l'utilisateur existent ; et
accepter des informations d'identification et des données de préférence provisoires destinées à l'utilisateur et devant être stockées sur le serveur responsable de la livraison des données à l'utilisateur.

15. Produit à base de programme informatique destiné à livrer des données d'un dispositif source (200) à l'un d'une pluralité de dispositifs de destination (328), le produit à base de programme informatique comprenant un support lisible par ordinateur stockant un code de programme qui, lorsqu'il est exécuté par un processeur d'un dispositif ou d'un système informatique, fait en sorte que le dispositif ou le système informatique mette en oeuvre le procédé selon l'une quelconque des revendications 11 à 14.
